Europäisches Patentamt

European Patent Office

Office européen des brevets

(19)

(11) Numéro de publication: **0 077 846**

**A1**

(12)

# DEMANDE DE BREVET EUROPEEN

(21) Numéro de dépôt: **81109056.2**

(22) Date de dépôt: **28.10.81**

(51) Int. Cl.³: **H 01 M 2/18**
**H 01 M 4/76**

(43) Date de publication de la demande:
**04.05.83 Bulletin 83/18**

(84) Etats contractants désignés:
**AT BE CH DE FR GB IT LI LU NL SE**

(71) Demandeur: **DUNES HOLDING Société Anonyme**
**14 rue Aldringen**
**L-1118 Luxembourg(LU)**

(72) Inventeur:
**L'inventeur a renonce a sa designation**

(74) Mandataire: **Meyers, Ernest et al,**
**Office de Brevets Freylinger & Associés 46 rue du**
**Cimetière B.P. 1153**
**L-1011 Luxembourg(LU)**

(54) **Support poreux continu en forme d'enveloppe pour plaques d'accumulateurs électriques.**

(57) Dans un support poreux continu en forme d'enveloppe constitué d'un matériau anti-acide tissé, thermorétractable (polyester par exemple) et fermé sur deux ou trois côtés, utilisable dans les plaques d'accumulateurs électriques au plomb, un nombre réduit de fils à proximité des côtés consiste en des filés mixtes d'une matière thermoplastique (polypropylène par exemple) ayant un point de fusion inférieur à celui du matériau anti-acide et qui est capable de fondre et de s'agglomérer avec eux pendant le traitement thermique de retrait. Ceci donne lieu, le long des deux côtés à la formation d'une bande continue imperméable et électriquement isolée, ce qui augmente la durée de vie des plaques d'accumulateurs.

Ces enveloppes peuvent présenter, à des intervalles réguliers, des nervures intermédiaires constituées d'un filé de titre beaucoup plus élevé et d'une résine à bas point de fusion. Lors du thermoformage, ces nervures se consolident et donnent finalement une gaine semi-rigide à nervures incorporées, qui sont mécaniquement portantes.

EP 0 077 846 A1

## Support poreux continu en forme d'enveloppe pour plaques d'accumulateurs électriques

La présente invention concerne un support poreux continu en forme d'enveloppe constitué d'un matériau anti-acide tissé, thermorétractable et fermé sur au moins deux côtés, pour des plaques d'accumulateurs électriques au plomb.

On sait que la durée de vie des accumulateurs électriques au plomb est étroitement liée au fait que la matière active se détache de la plaque positive ou négative et qu'elle est également influencée par la corrosion du support conducteur en alliage de plomb.

On a cherché, dans le domaine des accumulateurs électriques à plaques planes, à maintenir la matière active pressée et compacte dans les grilles en la comprimant adéquatement sur les faces des plaques et en introduisant entre elles des matériaux poreux capables de soutenir la matière active, par exemple de la laine de verre, ou des séparateurs ou éléments d'écartement en matière synthétique percés, ondulés ou nervurés.

La séparation de la matière active des plaques positives ou négatives est provoquée par les efforts mécaniques dus aux variations de volume de la matière active elle-même, par la surcharge des éléments et par les vibrations auxquelles la batterie est fréquemment soumise au cours du service.

On sait également que la capacité d'une plaque plane est déterminée par la quantité de matière active et par la possibilité d'accès de l'acide à cette plaque en quantité et à la vitesse requises. On sait encore que tout phénomène pouvant ralentir ou réduire la diffusion de l'acide a pour résultat d'accélérer la chute de tension dans les plaques, ce qui exerce un effet préjudiciable immédiat sur le rendement de l'accumulateur.

On connaît à présent, par la littérature technique et les brevets, l'utilisation des différents matériaux capables de soutenir la matière active des plaques planes.

Les composants structuraux d'un élément d'accumulateur au plomb-acide consistent en deux électrodes constituées par des grilles de plomb, leur matière active, le diélectrique, l'électrolyte et, en outre, le récipient qui les contient.

La condition essentielle d'un bon fonctionnement implique que tous les composants structuraux résistent à la répétition des charges et des décharges et, en particulier pour les batteries destinées à la traction, qu'ils puissent se dégrader très lentement au cours des années de service.

Par conséquent, pour réaliser une plaque plane positive, il faut pratiquement résoudre les problèmes suivants :

- soutenir la matière active des plaques et garantir sa parfaite cohésion et son adhésion contre la grille de sustentation en plomb ou en alliage de plomb,

- contenir la matière active tout en garantissant, en même temps, une porosité élevée permettant la liberté de flux de l'électrolyte,

- assurer une bonne élasticité, car il faut permettre à la matière active de supporter les variations réversibles de volume dues aux transformations du peroxyde de plomb en sulfate et vice versa,

- garantir une résistance mécanique adéquate et constante dans le temps,

- garantir une bonne résistance à la dégradation électrochimique due à l'effet de l'acide sulfurique et de l'oxygène naissant,

- ne pas polluer l'électrolyte avec des produits de destruction de la matière polymérique, en particulier avec des ions chlore et avec des ions perchlorates.

On utilise actuellement, pour soutenir la matière active, des matériaux communément appelés "porte-pâte" réalisés en feutre de laine de verre ou en matière synthétique poreuse "mat retainer". En général, on les appuie simplement contre les faces de la plaque plane; il s'agit de matières synthétiques mélangées, ou bien chargées au moyen de supports inorganiques, qui peuvent parfois être également enroulées en une ou plusieurs couches autour de la plaque plane, afin d'envelopper celle-ci complètement. On forme ensuite un paquet de plaques maintenues pressées les unes contre les autres en utilisant des éléments d'écartement appropriés en une sorte de bouchon, de façon à assurer le soutien réciproque des plaques et, principalement, de leur matière active.

On connaît, par la littérature, l'utilisation de quelques types d'enveloppes. Quelques-unes sont réalisées par une méthode de tissage de bas tubulaires; dans ce cas, quand le bas est pressé, son diamètre s'élargit, tandis qu'au contraire, il se produit une contraction du diamètre quand le bas est tiré dans le sens de la longueur. Cette fluctuation relative est due précisément au système de fabrication que l'on appelle "tissage tubulaire". L'efficacité de ce système est cependant limitée intrinsèquement par sa propre conception, vu que l'augmentation de volume de la matière active et la compression correspondante, en augmentant les dimensions de la plaque, en causent l'élargissement et le raccourcissement, faisant ainsi perdre l'efficacité du maintien de la compression et découvrant, dans les cas les plus graves, la partie inférieure et la partie supérieure de cette plaque. D'autres systèmes prévoient la réalisation de l'enveloppe par des procédés de thermosoudage, de couture ou d'autres systèmes partant de deux pièces de tissu synthétique ou de matériaux microporeux synthétiques ou encore de tissus non tissés, ayant des dimensions à peu près égales à celles de la plaque, lesquels sont joints sur deux ou trois côtés de façon à former une enveloppe dans laquelle est insérée ensuite, la plaque plane. Toutefois, ce système est généralement limité aux plaques négatives, qui n'exercent pas de pression dans le plan de la plaque, parce que les enveloppes de ce type ne pourraient pas soutenir la poussée sur les côtés des plaques prositives planes.

Enfin, la demande de brevet italien No A 27433/79 propose un procédé de réalisation d'une enveloppe plane fermée sur trois côtés au moyen d'un tissage. Ce système ne résout cependant pas encore complètement le problème de la plaque positive. En effet, l'une des causes les plus fréquentes pour lesquelles la batterie s'épuise et meurt est la présence de courts-circuits entre les plaques de pôles opposés sur leurs bords latéraux et de fond.

Il existe diverses techniques mécaniques grâce auxquelles il est possible d'obvier à cet inconvénient. On connaît, non seulement par la littérature des brevets mais également dans la pratique, l'utilisation de petits canaux protecteurs en plastique sur les bords verticaux des plaques négatives; il est connu aussi d'isoler la plaque positive tubulaire au moyen d'un petit tube semi-aveugle (brevet britannique 874862, Tudor) ou par l'emploi d'un revêtement à l'aide de matériaux adéquats qui isolent les deux bords extérieurs des gaines multitubulaires (brevet britannique 1466481, Mecondor).

L'objet de la présente invention vise à réaliser une enveloppe plane garantissant une plus longue durée de vie de la plaque et réunissant les différents avantages individuels des systèmes utilisés jusqu'à présent, en fabriquant, par les méthodes de tissage connues, un tissu tubulaire double, fermé sur au moins deux côtés, mais contenant sur les bords, à proximité des côtés de l'enveloppe, des filés qui puissent fondre pendant l'opération d'introduction des plaques et de thermoformage de cette enveloppe et donner lieu localement à la formation d'une bande continue, consistante, rigide et isolante.

La présente invention, telle qu'elle est caractérisée dans les revendications, permet d'atteindre cet objectif. En particulier, en utilisant une enveloppe en matière synthétique tissée et poreuse, résistant à l'acide et à l'oxygène naissant et fermée sur deux ou trois côtés, on obtient une plaque positive possédant toutes les caractéristiques précédemment énumérées.

On va décrire à présent, à simple titre d'exemple, quelques modes de réalisation de l'invention.

On réalise l'enveloppe obtenue par tissage multiple en fermant, à des intervalles réguliers préétablis, le tissu tubulaire double à l'aide de différents systèmes; on peut par exemple inverser tous les fils de chaîne, c'est-à-dire amener tous les fils qui constituent la partie supérieure du tissu dans la partie inférieure du tissu adjacent et tous ceux qui constituent la partie inférieure dans la partie supérieure du tissu adjacent, de façon que le tissu supérieur et le tissu inférieur soient reliés entre eux d'une façon univoque et se croisent en forme de X.

Ou bien, on peut insérer quelques fils de trame qui lient les deux tissus indépendants en un seul tissu plat
sur une largeur opportune.  Ces techniques sont bien connues
des experts de la branche et sont, en outre, illustrées
et décrites dans quelques brevets, le brevet américain
4,048,399 et les brevets britanniques 809884 et 908060.

On va décrire maintenant de manière détaillée un
exemple de réalisation de l'objet de la présente invention.

On suppose qu'un métier fabrique un tissu d'une
largeur de 500 mm.  On peut produire sur ce métier des
enveloppes ayant une hauteur de 500 mm et une largeur de
200 mm.  Il est clair que l'on pourra produire ensuite une
ou plusieurs enveloppes sur le même métier en fonction,
précisément, de la largeur des métiers et de la hauteur
des enveloppes.

On sait, en outre, qu'une enveloppe en tissu de
500 mm de hauteur et de 200 mm de largeur, par exemple, peut
être produite tant dans le sens de la trame (c'est-à-dire
avec la hauteur de 500 mm dans le sens des trames du métier)
que dans le sens de la chaîne (c'est-à-dire avec la hauteur
de 500 mm dans le sens de l'ourdissage de ce métier).

On suppose à présent, à titre d'exemple, vouloir
produire une enveloppe d'une hauteur de 500 mm dans le sens
de la trame.  Le métier commencera à produire les deux tissus
indépendants sur une largeur de 190 mm environ.  A ce moment,
toujours dans les deux tissus encore indépendants, on insère
à côté des duites qui constituaient la trame, par exemple
100 % en fibre polyester, d'autres filés en changeant le
nombre d'insertions par centimètre ou simplement en faisant
varier les titres des filés insérés.

Le métier poursuit la réalisation des deux tissus
indépendants en faisant alterner les duites de filé consistant uniquement de polyester avec des duites de fil continu
ayant une teneur, totale ou partielle, en polypropylène
titrant 1.500 deniers, c'est-à-dire plus gros.  Il est
évident que dans cet intervalle de 10 mm environ, le tissu
sera bien plus serré et plus compact.  Après la fin de la
production des 10 mm de polyester non pur, les deux tissus
sont reliés entre eux.  Cette liaison se fait de façon à
lier tous les fils de chaîne qui constituaient le tissu supérieur et tous les fils de chaîne qui constituaient le tissu inférieur en un tissu plan unique au moyen de quelques trames qui fonctionnent comme un lien. Puis on insère, par exemple, huit trames de polyester qui constituent le tissu plan unique de séparation. A la fin de ces huit duites, le métier reprend sa fabrication des deux tissus indépendants. Pour les dix premiers mm, le métier alternera les trames de polyester, avec les trames à teneur, partielle ou totale, en polypropylène de 1.500 deniers. Au terme des 10 mm, le métier reprendra la production sur 190 mm des deux tissus indépendants de polyester. Il produira, ensuite, les 10 mm restants avec des trames mixtes polyester/polypropylène. Il fermera ensuite l'enveloppe sur le côté de la longueur. En même temps, le métier travaillera de façon à unir les deux lisières latérales du tissu de manière à relier le tissu supérieur au tissu inférieur, dans le sens d'avancement du métier, donc dans le sens de la largeur de la monogaine sur le fond. On aura alors obtenu une enveloppe plane fermée sur les quatre côtés, de 200 mm de base et de 500 mm de hauteur.

A ce moment, en ouvrant l'un des quatre côtés - de préférence dans le sens des 200 mm - on obtient une enveloppe plane fermée sur les trois autres côtés. Ou, comme autre solution, on peut couper l'enveloppe plane par le milieu, c'est-à-dire dans le sens des 500 mm et obtenir ainsi deux enveloppes planes fermées sur trois côtés et d'une dimension de 250 mm de hauteur et de 200 mm de largeur.

Un autre exemple réalisable est le suivant : on fabrique une enveloppe comme la précédente, mais on insère aux deux bords latéraux - c'est-à-dire aux deux lisières du tissu - et sur une largeur de 5 mm, par exemple, des fils d'une teneur, totale ou partielle, en polypropylène qui alternent avec les fils de polyester à haute ténacité aux deux bords du tissu. On obtient donc une enveloppe fermée sur les quatre côtés et ayant sur ses quatre côtés des bords d'une épaisseur de 10 ou de 5 mm réalisés avec des filés d'une teneur, totale ou partielle, en polypropylène alternés ou non. Cette enveloppe peut être coupée par le milieu, comme dans l'exemple précédent, et l'on obtient ainsi deux enveloppes fermées sur trois côtés et ayant, sur ces trois côtés fermés, des filés mixtes polyester/polypropylène.

On peut réaliser d'autres exemples. Les fils adjacents aux ligatures qui délimitent l'enveloppe peuvent être, en effet, constitués de filés tels que des filés en polypropylène, en polyéthylène, en PVC ou en d'autres matières qui fondent dans les conditions du thermoformage de la gaine, par exemple, à des températures de peu supérieures à 140°C. Ces fils peuvent être réalisés en partant de fibres mixtes, par exemple en polypropylène et polyester ou PVC et polyester ou encore en jumelant simplement des fils ou des filés de nature différente comme, par exemple encore le prolpropylène et le polyester, en les retordant simplement entre eux, de sorte que dans ces filés il n'y aura qu'un seul des deux composés qui fondra, le polypropylène par exemple, en couvrant l'autre fil - le polyester par exemple - qui constituera l'armature interne de ce fil. En fondant dans les conditions du thermoformage de la gaine, ces fils adhèrent et lient entre eux les autres fils, par exemple le fil de verre ou le fil de polyester, en formant localement, par suite de la fusion, un film épais, imperméable, résistant et d'une largeur permettant d'assurer le recouvrement des nervures externes de la plaque qui y est insérée et donc leur isolation électrique.

Selon le degré de rigidité ou le degré d'isolation que l'on désire obtenir ou encore selon le degré de rigidité et de robustesse de l'enveloppe, il est possible d'insérer sur les deux faces, à des intervalles définis, des fils avec des titres plus gros, ou des monofils, toujours d'un titre plus gros, qui pourront constituer une véritable armature de support de cette enveloppe. En outre, l'emploi de monofils d'un titre nettement plus gros placés à une certaine distance l'un de l'autre à des intervalles réguliers pourra constituer, sur les deux faces de la gaine, une série de nervures pouvant être très utiles lors de la phase de montage de la plaque et remplacer les nervures des séparateurs.

On en décrit à présent un exemple de réalisation. On fabrique une enveloppe, comme dans l'exemple précédent et dans les mêmes dimensions. On part donc de fils de chaîne en filé à haute ténacité qui constitueront ensuite les fils transversaux de l'enveloppe plane. On utilisera ensuite un fil jumelé polyester/polypropylène, par exemple, en accouplant un 500 deniers multifils avec un 1.500 deniers polypropylène multifils. On obtient ainsi un fil ayant un titre quatre fois supérieur à celui utilisé dans l'autre sens. Ce fil mixte est inséré dans les parties adjacentes aux ligatures qui délimitent les bords de l'enveloppe plane, par exemple pour les 10 premiers mm de distance à partir du bord; puis le même fil mixte polyester/polypropylène est inséré régulièrement toutes les dix insertions de trame, réalisées uniquement avec le fil 100 % polyester. On obtient ainsi une structure pour laquelle chacun des deux tissus qui constituent les faces de l'enveloppe présentera, à des intervalles réguliers, c'est-à-dire tous les dix fils, un fil beaucoup plus gros qui émergera du plan proprement dit et sera, précisément, constitué du fil mixte polyester/polypropylène.

Réalisées comme décrit précédemment, les enveloppes sont ensuite utilisées pour recouvrir les plaques planes qui y sont insérées. On se donne, par exemple, comme objectif d'isoler et de soutenir une plaque plane du type traditionnel avec une grille en alliage de plomb-antimoine obtenue par fusion. L'opération de thermoformage de l'enveloppe plane consiste alors à insérer la plaque recouverte de pâte, encore partiellement humide ou déjà séchée, dans l'enveloppe de tissu puis à la traiter dans un four de polymérisation et de rétrécissement, où les filés à fort retrait auront tendance à se rétracter et où l'enveloppe deviendra une gaine semi-rigide dont les fils envelopperont d'une façon tenace et parfaitement élastique la plaque plane, en s'adaptant à sa surface. La gaine ne subira pas de racourcissement dans le sens de la longueur car elle est constituée de fils verticaux inertes ou déjà stabilisés thermiquement. La largeur des enveloppes peut être exactement calibrée en fonction de la plaque qui doit y être introduite car on connaît les valeurs du retrait thermique des fils transversaux en fonction de la température.

Il est donc possible de faire en sorte que l'enveloppe adhère parfaitement et avec force à la plaque plane sans toutefois plier cette dernière. Comme données préférentielles, on peut indiquer, par exemple, que si les fils transversaux ont un retrait de 12 %, il convient de laisser 2 ou 3 % de retrait aller en étirement et en force d'adhésion de ces fils sur la plaque, alors que 10 % forment le retrait proprement dit, ce qui revient à dire que pour une plaque plane de 180 mm de périmètre de la section transversale, il sera opportun d'utiliser une enveloppe de 200 mm de périmètre de section.

Il faut souligner le fait que, dans tous les exemples qui viennent d'être cités, le fil de trame et plus généralement le fil vertical de l'enveloppe plane doit être un fil stabilisé thermiquement, afin qu'il ne subisse pas de retrait dans les conditions opératoires du thermoformage.

On va donner maintenant un autre exemple, en partant de plaques réalisées avec des grilles expansées. On sait que les plaques réalisées en alliage de plomb laminé en expansion n'ont généralement pas une rigidité suffisante pour permettre leur emploi dans des conditions difficiles ou avec des dimensions de plaques supérieures à 140 x 150 mm par exemple. Par contre, le produit de la présente invention permet de gainer et d'utiliser également les grilles planes expansées pour la traction sur route, surtout pour la traction légère. En effet, une fois recouverte de pâte selon les procédés automatiques connus, la plaque plane obtenue en partant d'une grille expansée est insérée dans une enveloppe appropriée, c'est-à-dire réalisée avec des nervures verticales et transversales qui constituent un véritable réseau de support pour la plaque et un dispositif d'écartement pour les séparateurs. Ces nervures seront constituées, par exemple, de filés mixtes polyester-polypropylène ayant un titre de 3.000 deniers. Ces fils de grandes dimensions constitueront - après l'opération de thermoformage et, par conséquent après la fusion, partielle ou totale, du polypropylène autour du fil de polyester - un véritable réseau à grosses mailles immergé dans le tissu normal et poreux qui constitue les deux faces de la gaine thermoformée.

Alors, en présence d'un pas très étroit, comme cela se présente dans la traction légère ou dans le démarrage lourd, il suffira d'utiliser un séparateur lisse, de préférence à enveloppe négative.

REVENDICATIONS

1. - Support continu en forme d'enveloppe, constitué d'un matériau anti-acide tissé, thermorétractable et fermé sur au moins deux côtés pour des plaques d'accumulateurs électriques au plomb, caractérisé par le fait qu'un nombre réduit de fils à proximité des côtés consistent en des filés mixtes d'une matière thermoplastique dont le point de fusion est inférieur à celui du matériau anti-acide et qui est capable de fondre et de s'agglomérer avec eux pendant le traitement thermique de retrait donnant lieu ainsi, le long des deux côtés, à la formation d'une bande continue imperméable et électriquement isolée.

2. - Support continu en forme d'enveloppe pour des accumulateurs électriques suivant la revendication 1, caractérisé en ce que la matière anti-acide est un multifil en polyester à haute ténacité.

3. - Support continu en forme d'enveloppe pour des accumulateurs électriques suivant l'une des revendications 1 ou 2, caractérisé en ce que la matière thermoplastique est du polypropylène.

4. - Support continu en forme d'enveloppe pour des accumulateurs électriques suivant l'une des revendications 1 à 3, caractérisé en ce que seul le filé parallèle aux côtés ouverts est thermorétractable.

5. - Support continu en forme d'enveloppe pour des accumulateurs électriques suivant l'une des revendications 1 à 4, caractérisé en ce que lorsque l'enveloppe est fermée sur trois côtés, le filé perpendiculaire au côté ouvert consiste entièrement ou partiellement en un filé de laine de verre, couplé, à proximité des trois côtés, avec un filé thermoplastique à bas point de fusion.

6. - Support continu en forme d'enveloppe pour des accumulateurs électriques suivant l'une des revendications 1 à 5, caractérisé en ce qu'il contient des filés mixtes fusibles à un titre substantiellement plus élevé, disposés à des intervalles réguliers dans les deux faces de l'enveloppe, afin de créer des nervures mécaniquement portantes et saillantes par rapport au corps de l'enveloppe.

- 12 -   . 0077846

7. - Support continu poreux en forme d'enveloppe pour des accumulateurs électriques suivant l'une des revendications 1 à 6, caractérisé en ce que les filés sont imprégnés de substances polymérisables par condensation ou par polymérisation.

8. - Support continu en forme d'enveloppe pour des accumulateurs électriques suivant l'une des revendications 1 à 7, caractérisé en ce qu'il est fermé et isolé uniquement sur les deux côtés verticaux.

9. - Plaques planes pour des accumulateurs électriques au plomb, caractérisées en ce qu'elles sont insérées dans un support poreux continu en forme d'enveloppe isolé électriquement sur les côtés suivant les revendications 1 à 8, caractérisées en ce que les enveloppes ont un retrait thermique supérieur au jeu initial entre l'enveloppe et la plaque, suite à quoi le tissu rétracté est en tension élastique après le traitement thermique.

10. - Plaques planes pour des accumulateurs électriques au plomb, caractérisées en ce qu'elles sont insérées dans des enveloppes suivant l'une des revendications 1 à 9, dans lesquelles les bandes latérales isolantes de fils fondus au-dessus des fils porteurs de polyester sont en mesure de remplacer les nervures latérales habituelles en alliage de plomb et en ce que le conducteur vertical principal de prélèvement de courant se trouve en position pratiquement centrale.

11. - Plaques planes pour des accumulateurs électriques au plomb caractérisées en ce qu'elles sont insérées dans des enveloppes suivant l'une des revendications 1 à 10, dans lesquelles les nervures mécaniquement porteuses provenant de la fusion sont distribuées sur les deux faces du filé à point de fusion moins élevé au-dessus des fils portants de polyester et font saillie vers l'extérieur et peuvent donc soutenir et écarter le séparateur lisse ou en forme d'enveloppe, sans que celui-ci ait substantiellement besoin de nervures.

12. - Plaques planes pour des accumulateurs électriques au plomb caractérisées en ce qu'elles sont électriquement isolées sur les côtés à l'aide d'enveloppes suivant l'une des revendications 1 à 11.

**0077846**
Numéro de la demande

Office européen
des brevets

RAPPORT DE RECHERCHE EUROPEENNE

EP 81 10 9056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | <u>GB - A - 2 064 854</u> (GIOVANNI TERZAGHI)<br><br>* revendications 1,2,3,4,7,9 *<br><br>& FR - A - 2 470 448<br><br>-- | 1,2,4, 7,8,9, 12 | H 01 M 2/18<br>4/76 |
| A | <u>EP - A - 0 021 793</u> (KOEHLER MANU-FACTURING COMP.)<br><br>* revendications 1,5,7,8,15,16, 17,24; page 13, lignes 13-23; page 15, lignes 12-28; page 26, ligne 20 - page 27, ligne 23; figures 2,20,23,24-26 *<br><br>-- | 1 | |
| A | <u>FR - A- 2 017 472</u> (PICCIOTTO E.)<br><br>* revendications 1,3; figure 3; page 2, lignes 21-29 *<br><br>-- | | **DOMAINES TECHNIQUES RECHERCHES (Int. Cl. ³)**<br><br>H 01 M  2/18<br>2/14<br>4/76<br>4/14<br>10/12<br>10/14 |
| A | <u>FR - A - 1 001 612</u> (COMP. GEN. D'ELECTRICITE)<br><br>* résumé points A,B, 1°,2°,3°, 4°,6°; page 1, colonne de droite, 2e paragraphe, 3e paragraphe * <br><br>-- | 1 | |
| A | <u>DE - A - 2 910 203</u> (METZLER OTTO)<br><br>* revendications 1,2,3; page 4, lignes 12-18 *__          ./. | | |

Le présent rapport de recherche a été établi pour toutes les revendications

| Lieu de la recherche | Date d'achèvement de la recherche | Examinateur |
|---|---|---|
| La Haye | 17-06-1982 | D'HONDT |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

0077846

Numéro de la demande

**Office européen**

**des brevets**

**RAPPORT DE RECHERCHE EUROPEENNE**

EP 81 10 9056

-2-

| Catégorie | Citation du document avec indication, en cas de besoin, des parties pertinentes | Revendica-tion concernée | |
|---|---|---|---|
| | **DOCUMENTS CONSIDERES COMME PERTINENTS** | | **CLASSEMENT DE LA DEMANDE (Int. Cl.³)** |
| A | DE - A - 1 964 859 (VARTA) <br><br> * revendications 1,5; page 3, paragraphe 3 * <br><br> -- | | |
| D,A | FR - A - 2 305 861 (MECONDOR S.P.A.) <br><br> * revendications 1,2; page 5, ligne 33 - page 6, ligne 15; page 7, lignes 8-21 * <br><br> -- | | |
| A | US - A - 4 048 398 (E. SUNDBERG) <br><br> * revendications 1,2,3 * <br><br> --------- | | **DOMAINES TECHNIQUES RECHERCHES (Int. Cl.³)** |

OEB Form 1503.2   06.78